# EUROPEAN PATENT APPLICATION

(11) **EP 4 169 747 A2**
(43) Date of publication of application: **26.04.2023**
(21) Application number: 22192516.7
(22) Date of filing: 27.08.2022
(51) Int. Cl.: B60D 1/06, B60R 9/10

(54) **COUPLER ASSEMBLY FOR BALL MOUNT**

(30) Priority: 30.08.2021 TW 110132031
(71) Applicant: King Rack Industrial Co., Ltd., Taichung City (TW)
(72) Inventor: Wang, Chiu-Kuei, Taichung City (TW); Espesset, Hugues, Taichung City (TW)
(74) Representative: Cabinet Chaillot

(57) **Abstract**

A coupler assembly for a ball mount which includes a hitch ball and two protrusions extending from the shank of the ball mount. The coupler assembly includes a holder, a coupler, a knob and a pin. The coupler is detachably connected to a bike rack. The coupler is mounted to the holder. The pin extends through the holder the coupler, and is connected to the knob. The holder is lifted to hold the hitch ball when rotating the knob. The coupler includes a first part and a second part. The first part includes a first flange, and the second part includes a second flange. The first and second flanges are connected to each other by bolts. The second part includes two notches defined in the underside of the periphery thereof. The two notches accommodate the two protrusions extending from the shank of the ball mount.

## Description

### BACKGROUND OF THE INVENTION

### 1. Fields of the invention

The present invention relates to a coupler assembly, and more particularly, to a coupler assembly for coupling a hitch ball safely.

### 2. Descriptions of Related Art

The conventional ball mount includes a hitch ball that is connected to a shank and is secured to a trailer or a vehicle. The conventional coupler is connected with a bike rack, and the coupler is detachably coupled to the hitch ball so that the bike rack is able to be moved with the vehicle.

In order to enhance safety to the connection between the hitch ball and the coupler, some manufacturers provide lugs to the hitch ball, and the coupler includes hooks which hook to the lugs to ensure that the coupler is secured to the hitch ball.

However, the hooks may jump off from the lugs when driving the vehicle on uneven roads, and this situation may cause serious accidents.

The present invention intends to provide a coupler assembly to eliminate the shortcomings mentioned above.

### SUMMARY OF THE INVENTION

The present invention relates to a coupler assembly and comprises a holder, a coupler, a knob and a pin. The coupler includes two lugs extending therefrom so as to be connected to a bike rack. The coupler is mounted to the holder which is removably accommodated in the coupler. The pin extends through the holder and the coupler, and is connected to the knob. The knob is located on the top of the coupler and connected to the pin. The holder is lifted along the cone-shaped inside of the coupler and adapted to hold a hitch ball of a ball mount when rotating the knob.

The coupler includes a first part and a second part. The first part includes a first flange protruding radially from the lower end thereof, and the second part includes a second flange protruding radially from the top thereof. Each of the first and second flanges includes multiple holes, and multiple bolts extend through the multiple holes of each of the first and second flanges, and are connected with multiple nuts to connect the first part to the second part. The second part including two notches defined in the underside of the periphery thereof. The two notches are adapted to accommodate two protrusions extending from the shank of the ball mount.

The advantages of the present invention are that the coupler is composed of the first part and the second part, so that the manufacturing and assembly of the coupler is easy.

The notches of the second part are shaped so as to be matched with the protrusions of the ball mount, and this ensures that the coupler is securely hold the hitch ball.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the coupler assembly of the present invention;
Fig. 2 is an exploded view of the coupler assembly of the present invention;
Fig. 3 shows that the hitch ball is to be accommodated in the holder of the coupler assembly of the present invention;
Fig. 4 shows that the hitch ball is accommodated in the holder of the coupler assembly of the present invention, the knob is rotated to lift the holder to securely hold the hitch ball;
Fig. 5 is another angle of view of Fig. 3, wherein one of two lugs is connected to the first part of the coupler;
Fig. 6 is another angle of view of Fig. 4, wherein the coupler is lowered when the holder is lifted, and the two protrusions are accommodated in the notches of the second part of the coupler;
Fig. 7 shows the second part of the coupler and the hitch ball;
Fig. 8 illustrates the hitch ball is held in the holder;
Fig. 9 is a perspective view to show a second embodiment of the coupler assembly of the present invention;
Fig. 10 shows a partial cross sectional view of second embodiment of the coupler assembly of the present invention, wherein the lever is not yet pivoted downward, and
Fig. 11 shows a partial cross sectional view of second embodiment of the coupler assembly of the present invention, wherein the lever is pivoted downward.

### DETAILED DESCRIPTION OF THE PREFERRED EMBODIMENT

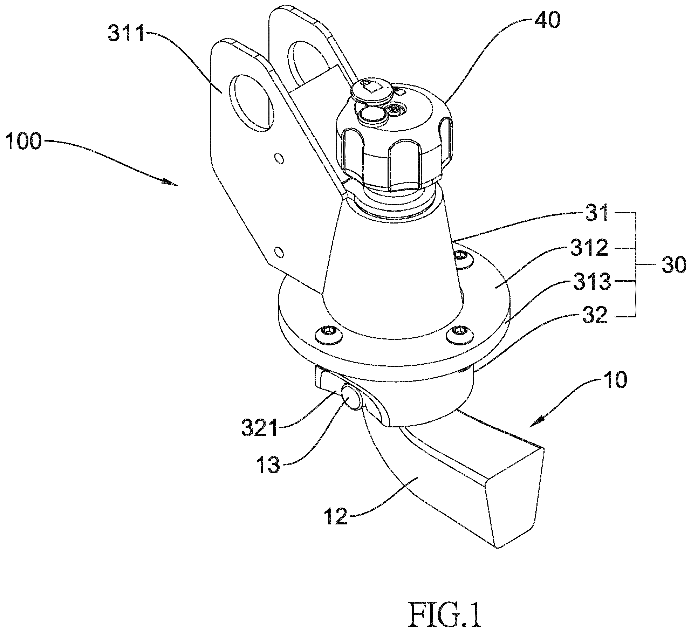

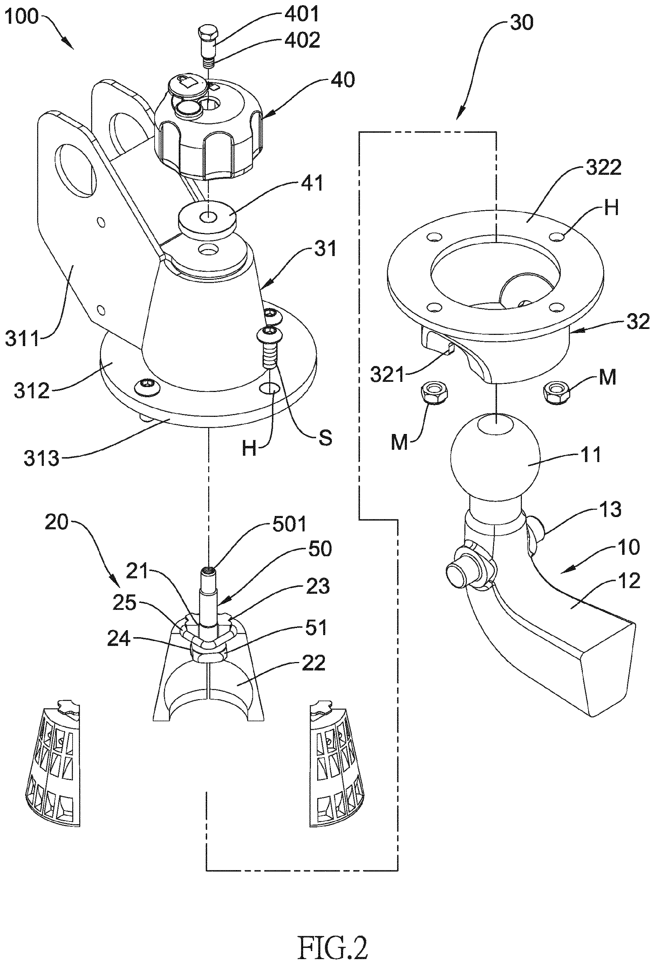

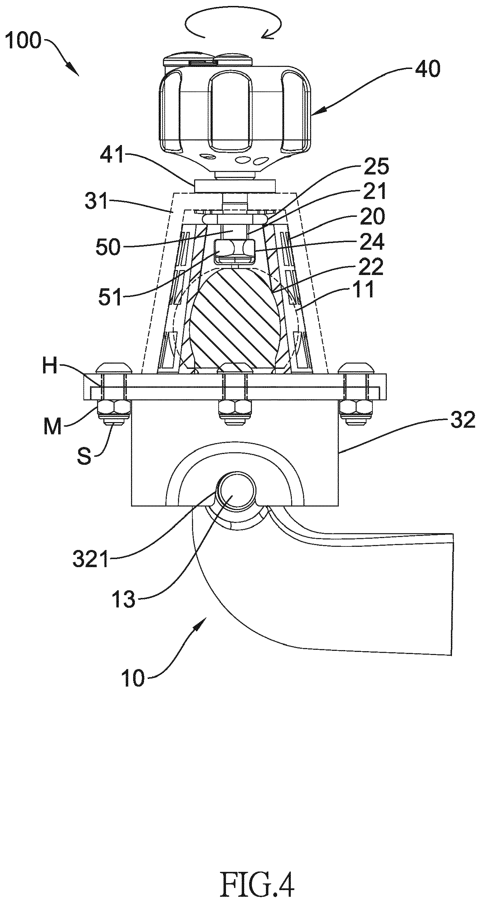

Referring to Figs. 1 to 4, the coupler assembly 100 of the present invention is used to be detachably connected to a ball mount 10 that includes a hitch ball 11 and N -shaped shank 12 which is connected to a vehicle (not shown). Two protrusions 13 extend from two sides of the shank 12 of the ball mount 10.

The coupler assembly 100 of the present invention comprises a holder 20, a coupler 30, a knob 40 and a pin 50. The coupler 30 includes two lugs 311 extending therefrom so as to be connected to a bike rack (not shown). The coupler 30 is a bell-shaped coupler and is mounted to the holder 20 which is removably accommodated in the coupler 30.

The holder 20 includes three pieces or four pieces which are assembled to form the holder 20. Each piece has a U-shaped recess 21 defined through the top thereof. The holder 20 includes a room 22 formed therein so as to accommodate the hitch ball 11 of the ball mount 10 in the room 22. A tube 23 extends from the top of the holder 20 and co-axially communicates with the four respective U-shaped recesses 21 when the four pieces are assembled with each other. Specifically, the tube 23 is composed of four curved parts respectively extending from the top of the four pieces of the holder 20. When the four pieces are assembled with each other, the four curved parts are assembled to form the tube 23. The pin 50 extends through the four respective U-shaped recesses 21 and the tube 23 via the room 22, and the pin 50 is threadedly connected to the knob 40 which is located on the top of the coupler 30. Specifically, a screw 401 extends through the knob 40 from the top of the knob 40 and includes a threaded section 402. The screw 401 includes a hexagonal head, and the knob 40 includes a hexagonal bore so that the hexagonal head of the screw 401 is engaged with the hexagonal bore of the knob 40. Therefore, the screw 401 is co-rotated with the knob 40. The pin 50 includes a threaded hole 501 defined in the top end thereof. The threaded section 402 of the screw 401 is threadedly connected to the threaded hole 501 in the top end of the pin 50. When rotating the knob 40, the screw 401 is rotated with the knob 40 and lifts the pin 50, so that the holder 20 is lifted along the cone-shaped inside of the coupler 30, and the four pieces of the holder 20 are moved toward each other. It is noted that a section of the pin 50 is located between the four respective U-shaped recesses 21 of the four pieces of the holder 20. A head 51 of the pin 50 that is opposite to the threaded hole 501 is located in a receiving area 24 defined in the inner periphery of the four respective U-shaped recesses 21. A ring 25 is mounted to the outside of the tube 23 to maintain the shape of the tube 23.

The coupler 30 includes a first part 31 and a second part 32 which is connected to the first part 31 from the underside of the first part 31. The first part 31 includes a first flange 312 protruding radially from the lower end thereof, and the second part 32 includes a second flange 322 protruding radially from the top thereof. Each of the first and second flanges 312, 322 include multiple holes "H". Multiple bolts "S" extend through the multiple holes "H" of each of the first and second flanges 312, 322, and are connected with multiple nuts "M" to connect the first part 31 to the second part 32. The second part 32 includes two notches 321 defined in the underside of the periphery thereof. The two notches 321 are shaped to accommodate the two protrusions 13 extending from the shank 12 of the ball mount 10.

The two lugs 311 and the first flange 312 are welded to the first part 31, the second flange 322 is welded to the second part 32. By this way, the manufacturing processes are easy and convenient. Besides, the first flange 312 includes a skirt 313 extending from the periphery of the first flange 312. The second flange 322 is located at inside of the skirt 313. A washer 41 is located between the tube 23 and the knob 40 to adjust the distance between the holder 20 and the knob 40.

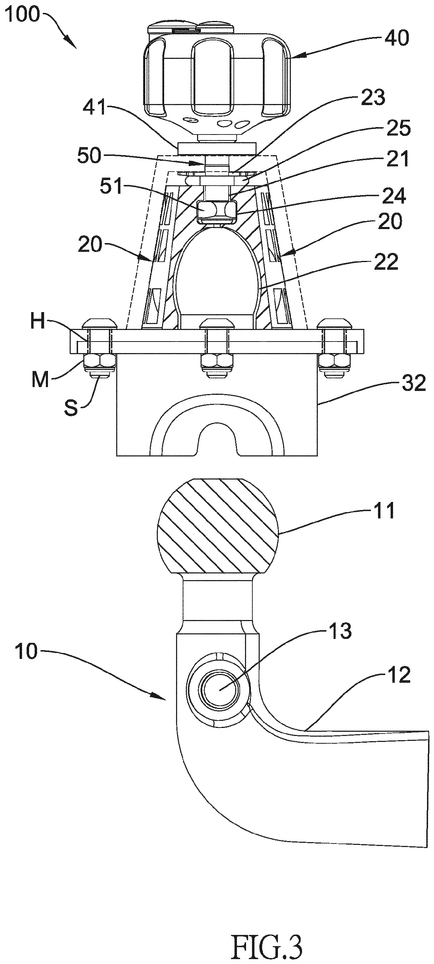

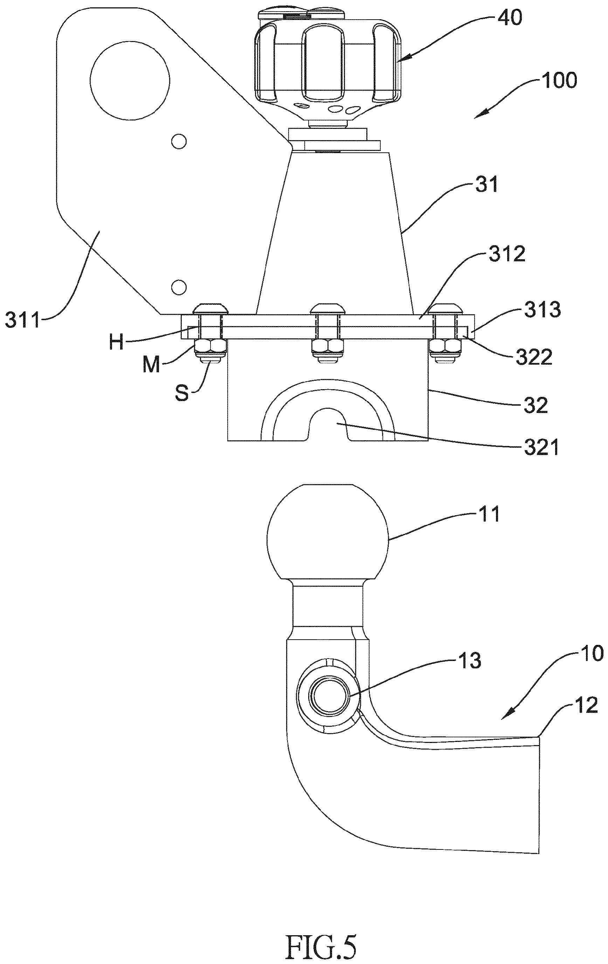

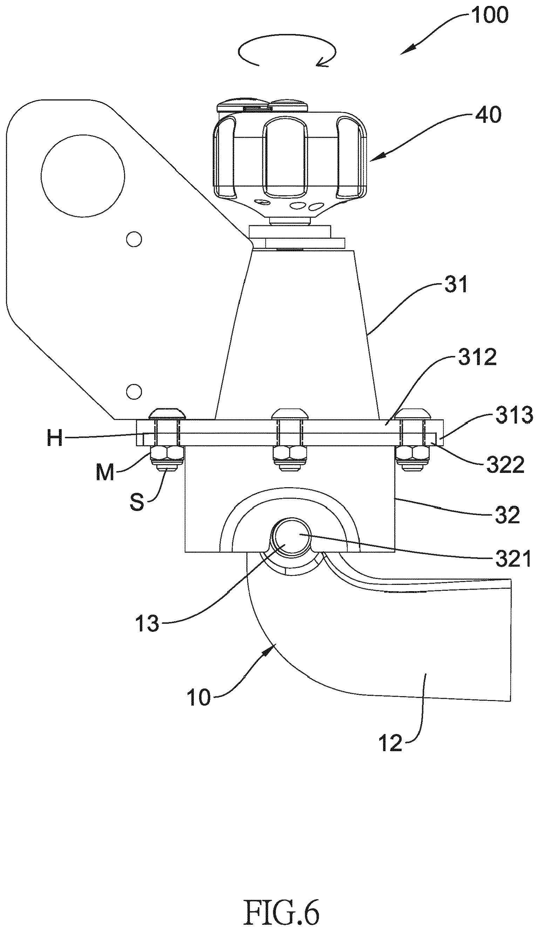

As shown in Figs. 3-6, when the knob 40 is rotated, the holder 20 is lifted along the cone-shaped inside of the coupler 30 and holds the hitch ball 11 of the ball mount 10. In the meanwhile, when the holder 20 is lifted, the coupler 30 is moved downward slightly so that the protrusions 13 of the ball mount 10 are snugly engaged with the two notches 321 of the second part 32. A pad (not shown) may be located between each pair of the notch 321 and the protrusion 13 to absorb vibration.

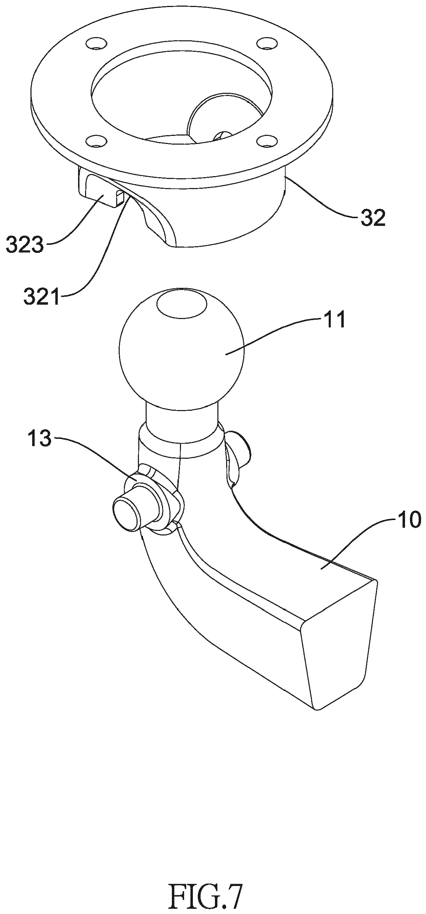

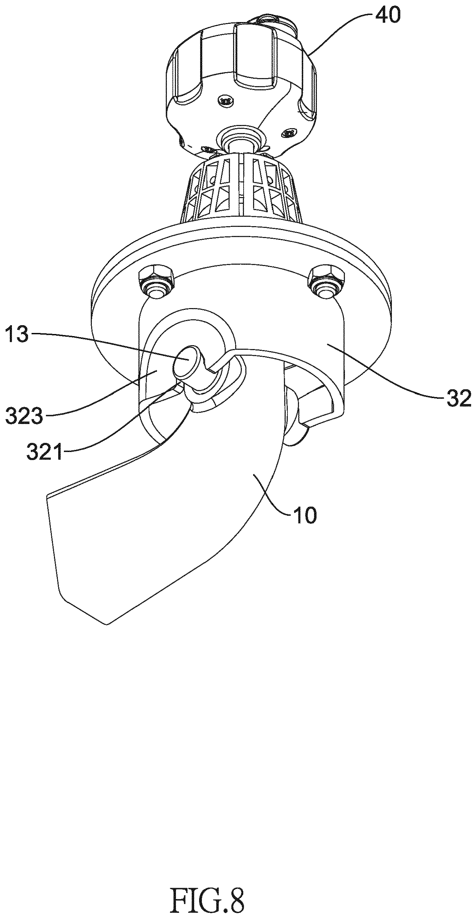

As shown in Figs. 7 and 8, the diameter of the second part 32 is larger than the diameter of the hitch ball 11 so as to allow the hitch ball 11 to pass through. A recessed and curved face 323 is formed in the outside of the second part 32, wherein the notch 321 is defined through the recessed and curved face 323. The two protrusions 13 slightly protrude beyond the two recessed and curved faces 323 when the two protrusions 13 are engaged with the notches 321.

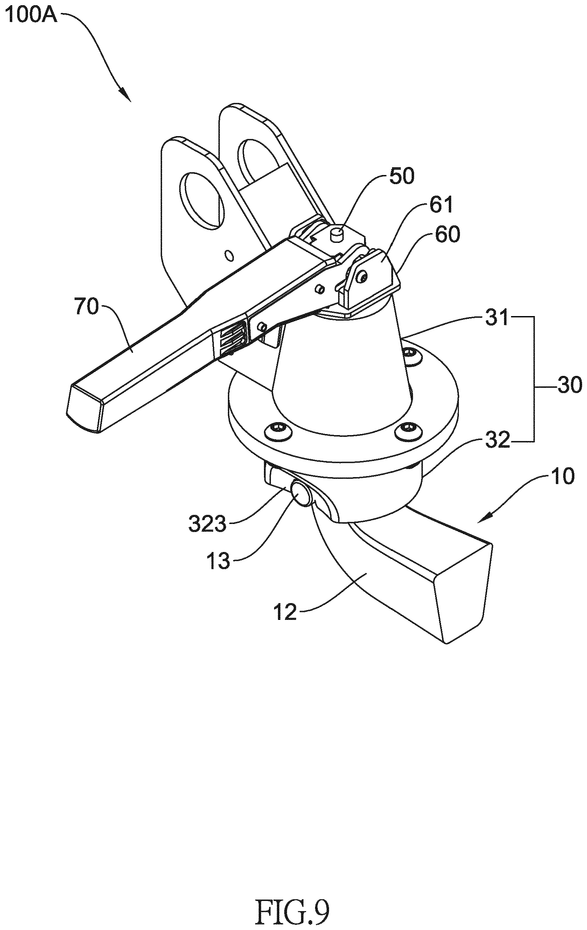

Figs. 9-11 show the second embodiment of the coupler assembly 100A of the present invention. The second embodiment is similar to the first embodiment except that the knob 40 used in the first embodiment is replaced by the link mechanism 60 and the lever 70 so as to cooperate with the pin 50 to lift the holder 20 to hold the hitch ball 11.

The link mechanism 60 includes a seat 61, a bra 62 and an activator 63, wherein the seal 61 is connected to the top of the coupler 30. The pin 50 does not have the threaded hole 501 in the first embodiment, and instead, the pin 50 includes a slot 52 defined axially therethrough. The lever 70 is pivotably connected to the seat 11. The bar 62 has a first end thereof pivotably connected to a tip potion 611 of the seat 61 by a pivot "R", and a second end of the bar 62 is pivotably connected to the slot 52 of the pin 50. The activator 63 has one of two ends thereof pivotably connected to the seat 61 and located beside the inclined side of the seat 61. Another one of the two ends of the activator 63 is pivotably connected to the lever 70. A press part 631 extends outward from the middle portion of the activator 63.

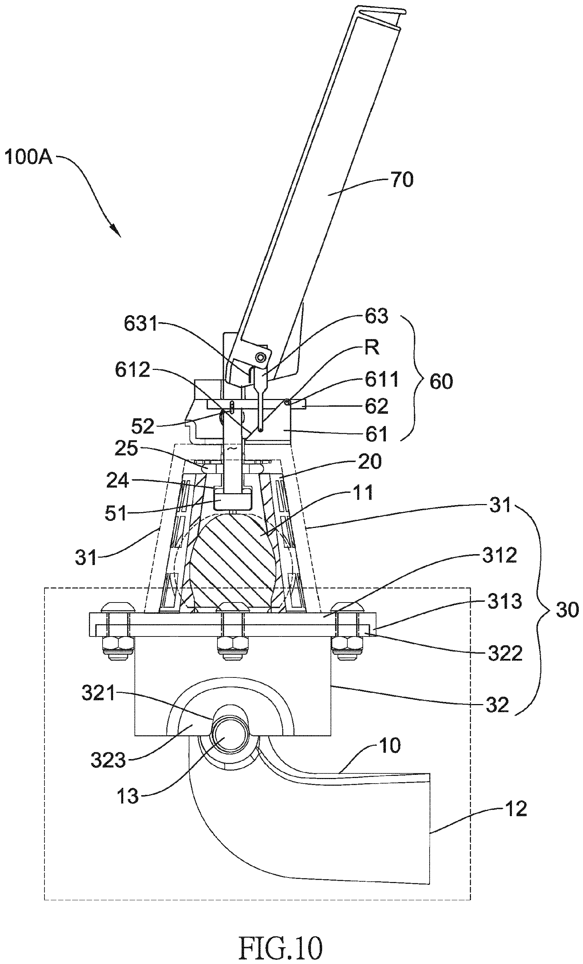

As shown in Fig. 10, when the lever 70 is positioned upright, the activator 63 is also positioned upright, and the head 51 of the pin 50 is lowed at a lower portion of the receiving area 24. The holder 20 is not lifted and the four pieces are separated from each other, so that the hitch ball 11 is not held by the holder 20.

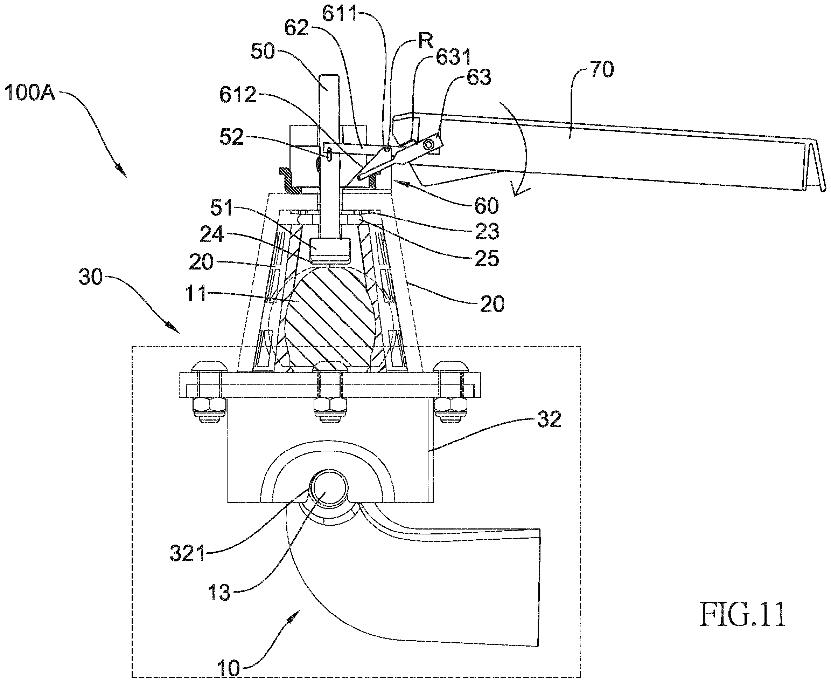

When the lever 70 is pivoted downward and toward the coupler 30 as shown in Fig. 11, the activator 63 is pivoted downward and the press part 631 pushes and pivots the bar 62 so that the second end of the bar 62 is pivoted upward about the pivot "R" and moved upward in the slot 52 to lift the pin 50 upward. Therefore the holder 20 is lifted to hold the hitch ball 11. In this status, the head 51 of the pin 50 is moved to an upper portion of the recess area 24. The lifting of the holder 20 makes the hitch ball 11 be lifted slightly relative to the coupler 30 so that the two protrusions 13 are engaged with the two notches 321. Therefore, the coupler assembly 100A is securely connected to the ball mount 10.

While we have shown and described the embodiment in accordance with the present invention, it should be clear to those skilled in the art that further embodiments may be made without departing from the scope of the present invention.

## Claims

1. A coupler assembly comprising:
a holder 20, a coupler 30, a knob 40 and a pin 50, the coupler 30 having two lugs 311 extending therefrom which are adapted to be connected to a bike rack, the coupler 30 mounted to the holder 20 which is removably accommodated in the coupler 30, the pin 50 extending through the holder 20 and the coupler 30 in sequence, and being connected to the knob 40 which is located on a top of the coupler 30, the holder 20 being lifted along a cone-shaped inside of the coupler 30 and adapted to hold a hitch ball 11 of a ball mount 10 when rotating the knob 40, and
the coupler 30 including a first part 31 and a second part 32, the first part 31 including a first flange 312 protruding radially from a lower end thereof, the second part 32 including a second flange 322 protruding radially from a top thereof, each of the first and second flanges 312,322 including multiple holes "H", multiple bolts "S" extending through the multiple holes "H" of each of the first and second flanges 312,322 and connected with multiple nuts "M" to connect the first part 31 to the second part 32, the second part 32 including two notches 321 defined in an underside of a periphery thereof, the two notches 321 adapted to accommodate two protrusions 13 extending from a shank 12 of the ball mount 10.

2. The coupler assembly as claimed in claim 1, wherein the two lugs 311 and the first flange 312 are welded to the first part 31, the second flange 322 is welded to the second part 32.

3. The coupler assembly as claimed in claim 1, wherein a screw 401 extends through the knob 40 from a top of the knob 40, the screw 401 is co-rotated with the knob 40, the screw 401 includes a threaded section 402, the pin 50 includes a threaded hole 501 defined in a top end thereof, the threaded section 402 of the screw 401 is threadedly connected to the threaded hole 501 in the top end of the pin 50.

4. The coupler assembly as claimed in claim 1, wherein the first flange 312 includes a skirt 313 extending from a periphery of the first flange 312, the second flange 322 is located at inside of the skirt 313.

5. The coupler assembly as claimed in claim 1, wherein the second part 32 is adapted to accommodate the hitch ball 11 of the ball mount 10, a recessed and curved face 323 is formed in the outside of the second part 32, wherein the notch is defined through the recessed and curved face 323.

6. A coupler assembly comprising:
a holder 20, a coupler 30, a knob 40 and a pin 50;
the holder 20 being accommodated in the coupler 30 and including four pieces which are assembled to form the holder 20, each piece having a U-shaped recess defined through a top thereof, a section of the pin 50 being located between the four respective U-shaped recesses 21 of the four pieces of the holder 20, the holder 20 including a room 22 formed therein so as to accommodate a hitch ball 11 in the room 22, a tube 23 extending from the top of the holder 20 and co-axially communicating with the four respective U-shaped recesses 21 when the four pieces are assembled with each other, the pin 50 extending through the four respective U-shaped recesses 21 and the tube 23 via the room 22, a head 51 of the pin 50 located in a receiving area 24 defined in an inner periphery of the four respective U-shaped recesses 21, a ring 25 mounted to an outside of the tube 23 to assemble the four respective tops of the four pieces;
the coupler 30 including a first part 31 and a second part 32, the first part 31 having a cone-shaped inside, two lugs 311 extending from the first part 31 for being connected to a bike rack, the first part 31 includes a first flange 312 protruding radially from a lower end thereof, the second part 32 including a second flange 322 protruding radially from a top thereof, each of the first and second flanges 312,322 including multiple holes "H", multiple bolts "S" extending through the multiple holes "H" of each of the first and second flanges 312,322 and connected with multiple nuts "M" to connected the first part 31 to the second part 32, the second part 32 including two notches 321 defined in an underside of a periphery thereof, the two notches 321 adapted to accommodate two protrusions 13 extending from the shank 12 of the ball mount 10, and
the knob 40 threadedly connected to the pin 50 and located on a top of the coupler 30, the holder 20 being lifted along the cone-shaped inside of the coupler 30 and adapted to hold the hitch ball 11 of a ball mount 10 when rotating the knob 40.

7. The coupler assembly as claimed in claim 6, wherein the two lugs 311 and the first flange 312 are welded to the first part 31, the second flange 322 is welded to the second part 32.

8. The coupler assembly as claimed in claim 6, wherein a washer 41 is located between the tube 23 and the knob 40 to adjust a distance between the holder 20 and the knob 40.

9. The coupler assembly as claimed in claim 6, wherein a screw 401 extends through the knob 40 from a top of the knob 40, the screw 401 is co-rotated with the knob 40, the screw 401 includes a threaded section 402, the pin 50 includes a threaded hole 501 defined in a top end thereof, the threaded section 402 of the screw 401 is threadedly connected to the threaded hole 501 in the top end of the pin 50.

10. The coupler assembly as claimed in claim 6, wherein the first flange 312 includes a skirt 313 extending from a periphery thereof, the second flange 322 is located at inside of the skirt 313.

11. The coupler assembly as claimed in claim 6, wherein the second part 32 is adapted to accommodate the hitch ball 11 of the ball mount 10, a recessed and curved face 323 is formed in the outside of the second part 32, wherein the notch is defined through the recessed and curved face 323.

12. A coupler assembly comprising:
a holder 20, a coupler 30, a pin 50, a link mechanism 60 and a lever 70;
the holder 20 being accommodated in the coupler 30 and including four pieces which are assembled to form the holder 20, each piece having a U-shaped recess 21 defined through a top thereof, a section of the pin 50 being located between the four respective U-shaped recesses 21 of the four pieces of the holder 20, the holder 20 including a room 22 formed therein so as to accommodate a hitch ball 11 in the room 22, a tube 23 extending from the top of the holder 20 and co-axially communicating with the four respective U-shaped recesses 21 when the four pieces are assembled with each other, the pin 50 extending through the four respective U-shaped recesses 21 and the tube 23 via the room 22, a head 51 of the pin 50 located in a receiving area 24 defined in an inner periphery of the four respective U-shaped recesses 21, a ring 25 mounted to an outside of the tube 23 to assemble the four respective tops of the four pieces;
the coupler 30 including a first part 31 and a second part 32, the first part 31 having a cone-shaped inside, two lugs 311 extending from the first part 31 for being connected to a bike rack, the first part 31 includes a first flange 312 protruding radially from a lower end thereof, the second part 32 including a second flange 322 protruding radially from a top thereof, each of the first and second flanges 312,322 including multiple holes "H", multiple bolts "S" extending through the multiple holes "H" of each of the first and second flanges 312,322 and connected with multiple nuts "M" to connected the first part 31 to the second part 32, the second part 32 including two notches 321 defined in an underside of a periphery thereof, the two notches 321 adapted to accommodate two protrusions 13 extending from the shank 12 of the ball mount 10, and
the lever 70 pivotably connected to the link mechanism 60 which is located on the coupler 30, the link mechanism 60 pivotably connected to the pin 50 50, when pivoting the lever 70 downward, the link mechanism 60 lifts the pin 50 upward, the pin 50 lifts the holder 20 along the cone-shaped inside of the coupler 30 and adapted to hold the hitch ball 11 of a ball mount 10.

13. The coupler assembly as claimed in claim 12, wherein the link mechanism 60 includes a seat 61, a bar 62 and an activator 63, the seal is connected to the top of the coupler 30, the pin 50 includes a slot 52 defined axially therethrough, the bar 62 has a first end thereof pivotably connected to a tip potion 611 of the seat 61 by a pivot "R", and a second end of the bar 62 is pivotably connected to the slot 52 of the pin 50, the activator 63 has one of two ends thereof pivotably connected to the seat 61, another one of the two ends of the activator 63 is pivotably connected to the lever 70, a press part 631 extends outward from a middle portion of the activator 63, when the lever 70 is pivoted downward toward the coupler 30, the press part 631 of the activator 63 pushes and pivots the bar 62 to lift the pin 50 upward so that the holder 20 is lifted along the cone-shaped inside of the coupler 30.

14. The coupler assembly as claimed in claim 12, wherein the first flange 312 includes a skirt 313 extending from a periphery thereof, the second flange 322 is located at inside of the skirt 313.

15. The coupler assembly as claimed in claim 12, wherein the two lugs 311 and the first flange 312 are welded to the first part 31, the second flange 322 is welded to the second part 32.
